# EUROPEAN PATENT APPLICATION

(11) **EP 4 535 451 A1**
(43) Date of publication of application: **09.04.2025**
(21) Application number: 24201824.0
(22) Date of filing: 23.09.2024
(51) Int. Cl.: H01M 4/133, H01M 4/134, H01M 4/1393, H01M 4/1395, H01M 4/38, H01M 4/583, H01M 4/62

(54) **NEGATIVE ELECTRODE FOR RECHARGEABLE LITHIUM BATTERY AND RECHARGEABLE LITHIUM BATTERY INCLUDING SAME**

(30) Priority: 06.10.2023 KR 20230133662
(71) Applicant: Samsung SDI Co., Ltd., Yongin-si, Gyeonggi-do 17084 (KR)
(72) Inventor: Lee, Jungmin, 17084 Gyeonggi-do (KR); Cho, Minho, 17084 Gyeonggi-do (KR); Cho, Yunshik, 17084 Gyeonggi-do (KR); Jung, Kyunghwa, 17084 Gyeonggi-do (KR); Kim, Hana, 17084 Gyeonggi-do (KR); Lee, Kukjoo, 17084 Gyeonggi-do (KR); Kim, Ho, 17084 Gyeonggi-do (KR)
(74) Representative: Michalski Hüttermann & Partner Patentanwälte mbB

(57) **Abstract**

Disclosed are a negative electrode for a rechargeable lithium battery and a rechargeable lithium battery including the same. The negative electrode includes a negative electrode active material, a cellulose-based compound, and a binder, and an amount of Na in the negative electrode is about 200 ppm to about 600 ppm

## Description

### BACKGROUND

### 1. Field

Embodiments of this disclosure relate to a negative electrode for a rechargeable lithium battery and a rechargeable lithium battery including the same.

### 2. Description of the Related Art

Recently, the rapid advance of electronic devices such as mobile phones, laptop computers, and electric vehicles using batteries has resulted in surprising increases in interest for rechargeable batteries having relatively high capacity and lighter weight.

Various research on the high-capacity of these rechargeable lithium batteries is being conducted. For increasing the capacity and the performances of the battery, it is useful to increase thickness of the electrode and there have been attempts to improve the speed for moving lithium ions in the thicker electrode.

### SUMMARY

One or more embodiments of the present disclosure provide a negative electrode for a rechargeable lithium battery exhibiting low resistance and excellent cycle-life characteristic.

Some embodiments provide a rechargeable lithium battery including the negative electrode.

One or more embodiments provide a negative for a rechargeable lithium battery including a negative electrode active material, a cellulose-based compound, and a binder, wherein an amount of sodium (Na) in the negative electrode is about 200 ppm to about 600 ppm.

Some embodiments provide a rechargeable lithium battery including the negative electrode; a positive electrode; and an electrolyte.

A negative electrode for a rechargeable lithium battery according to one or more embodiments may exhibit low resistance and excellent cycle-life characteristic.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

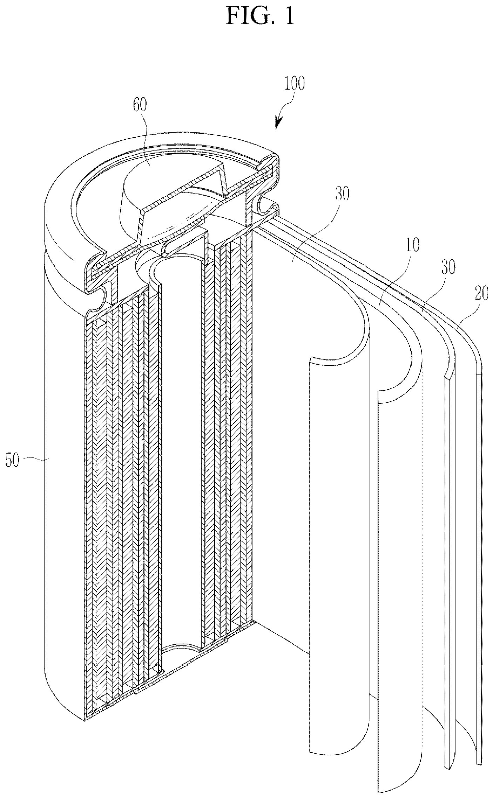

FIG. 1 to FIG. 4 are schematic diagrams showing rechargeable lithium batteries according to one or more embodiments.

### DETAILED DESCRIPTION

Hereinafter, embodiments of the present disclosure are described in more detail. However, these embodiments are examples, the present disclosure is not limited thereto, and the present disclosure is defined by the scope of the appended claims, and equivalents thereof.

Terms used in the specification are used to explain embodiments, but are not intended limit the present disclosure. Expressions in the singular include expressions in plural unless the context clearly dictates otherwise.

As used herein, the term "combination thereof' may include a mixture, a laminate, a complex, a copolymer, an alloy, a blend, or a reactant of constituents.

The terms "comprise", "include" or "have" are intended to designate that the performed characteristics, numbers, step, constituted elements, or a combination thereof are present, but it should be understood that the possibility of presence or addition of one or more other characteristics, numbers, steps, constituted element, or a combination are not to be precluded in advance.

The drawings may show that the thickness may be enlarged in order to clearly show the various layers and regions, and the same reference numerals are given to the same or similar parts throughout the specification. If an element, such as a layer, a film, a region, a plate, or the like is referred to as being "on" or "over" another part, it may include cases where it is "directly on" another element, but also cases where there is another element in between. In contrast, when an element is referred to as being "directly on" another element, there are no intervening elements present.

As used herein, the term "layer" includes a shape totally formed on the entire surface or a shape partial surface, when viewed from a plan view.

Herein, the term "or" is not to be construed as an exclusive meaning, for example, "A or B" may be construed to include A, B, A+B, or the like.

As used herein, when a definition is not otherwise provided, "copolymerization" means a block copolymerization, random copolymerization, graft copolymerization or alternating copolymerization, and "copolymer" means a block copolymer, a random copolymer, a graft copolymer, or an alternating copolymer.

As used herein, when a definition is not otherwise provided, a particle diameter or size may be an average particle diameter. Such a particle diameter indicates an average particle diameter or size (D50) where a cumulative volume is about 50 volume% in a particle size distribution. The particle size (D50) may be measured by any suitable method generally used in the art, for example, by a particle size analyzer, and/or by a transmission electron microscopic image, and/or a scanning electron microscopic image. In some embodiments, a dynamic light-scattering measurement device may be used to perform a data analysis, and the number of particles is counted for each particle size range, and from this, the average particle diameter (D50) value may be easily obtained through a calculation. In some embodiments, the average particle diameter or size (D50) may be measured by a particle size analyzer.

A negative electrode for a rechargeable lithium battery according to one or more embodiments includes a negative electrode active material, a cellulose-based compound, and a binder, and an amount of sodium (Na) in the negative electrode is about 200 ppm to about 600 ppm. The amount of Na included in the negative electrode may be about 200 ppm to about 400 ppm. The amount of Na included in the negative electrode may be a Na amount as an impurity or a Na amount derived from a Na-included compound used in the battery preparation.

Sodium (Na) may cause a decrease in capacity and columbic efficiency during charging and discharging, so that as the amount thereof is smaller or reduced, it is more suitable and performance of the rechargeable lithium battery is improved. However, in one or more embodiments, if the Na amount in the rechargeable lithium battery, for example, the Na amount included in the negative electrode, is about 200 ppm to about 600 ppm, the resistance (e.g., electrical resistance) may be reduced, thereby realizing excellent cycle-life characteristics. If the amount of Na included in the negative electrode is less than about 200 ppm, resistance (e.g., electrical resistance) increases, and the cycle-life characteristics deteriorate, and if it exceeds 600 ppm, the excessive amount of Na amount causes capacity and coulomb efficiency to decrease.

In one or more embodiments, sodium included in the negative electrode may be a type of a sodium ion (Na⁺) and thus, an amount of sodium may be an amount of the sodium ion (Na⁺). The amount of sodium may be a value maintained (or substantially maintained) even if a rechargeable lithium battery including the negative electrode is subjected to a formation charging and discharging. In some embodiments, this value (e.g., the amount of Na) may be obtained from the negative electrode which is separated, after a rechargeable lithium battery undergoes a formation charge and discharge. This formation charge and discharge may be performed at about 0.1 C to about 0.3 C for one to three cycles, but it is not limited thereto, and it may be performed under any suitable general formation charge and discharge conditions.

The sodium amount may be a value measured via an ICP-MS (inductively Coupled Plasma Mass Spectrometery) method.

The improvements in cycle-life characteristics due to reduced resistance caused from the sodium amount of about 200 ppm to about 600 ppm, may be achieved by controlling the Na amount included in the negative electrode, and may be not achieved by controlling the sodium amount included in other elements of the battery, such as the positive electrode, the electrolyte, and the separator, and/or the like, as impurities.

The control of the Na amount included in the negative electrode may be realized by adjusting the purities and types (or kinds) of the materials used in the negative electrode preparation, such as the negative electrode active material, the binder, and the cellulose-based compound, and/or the like, but is not limited thereto. For example, the purity of the cellulose-based compound may be about 98.5% to about 99.95%, about 99% to about 99.95%, or about 99.9% to about 99.95%.

The cellulose-based compound may be one or more of carboxymethyl cellulose, hydroxypropylmethyl cellulose, methyl cellulose, and/or alkali metal salts thereof. The alkali metal may be Na, K, and/or Li. For example, the alkali metal salt may be a Na salt, a K salt, and/or a Li salt. In one or more embodiments, the cellulose-based compound may be a carboxymethyl cellulose lithium salt or a mixture of a carboxymethyl cellulose lithium salt and a carboxymethyl cellulose sodium salt. If the cellulose-based compound is the mixture of the carboxymethyl cellulose lithium salt and the carboxymethyl cellulose sodium salt, a mixing ratio of the carboxymethyl cellulose lithium salt to the carboxymethyl cellulose sodium salt may be a weight ratio of less than about 100: more than about 0 to about 50:about 50.

In one or more embodiments, the negative electrode active material may include a carbon-based negative electrode active material, a silicon-based negative electrode active material, or combination thereof.

The carbon-based negative electrode active material may be crystalline carbon, amorphous carbon, or a combination thereof. The crystalline carbon may be graphite such as an unspecified shaped, sheet shaped, flake shaped, spherical shaped, and/or fiber shaped artificial graphite and/or natural graphite. The amorphous carbon may be soft carbon, hard carbon, mesophase pitch carbide, sintered cokes, and/or the like.

The Si-based active material may be Si, a Si-C composite, SiOₓ (0<x<2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si) or combination thereof, or may be at least one of these materials may be mixed together with SiO₂.

The element Q may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

The silicon-carbon composite may be a silicon and amorphous carbon composite. The silicon-carbon composite may have an average particle diameter D₅₀, for example, about 0.5 µm to about 20 µm. According to one or more embodiments, the silicon-carbon composite may include silicon particles and an amorphous carbon coated on the surface of the silicon particles. For example, it may include secondary particles (e.g., a core) where silicon primary particles are agglomerated and an amorphous carbon coating layer (shell) on the surface of the secondary particles. The amorphous carbon may be between the silicon primary particles, for example, to coat the silicon primary particles. The secondary particles may be distributed or dispersed in an amorphous carbon matrix.

The Si-C composite may further include crystalline carbon. For example, the silicon-carbon composite may include a core including crystalline carbon and silicon particles, and an amorphous carbon coating layer on the surface of the core. The crystalline carbon may be artificial graphite, natural graphite, or a combination thereof. The amorphous carbon may be soft carbon, hard carbon, mesophase pitch carbide, a sintered coke, and/or the like.

If the silicon-carbon composite includes silicon and amorphous carbon, an amount of the silicon may be, based on 100 wt% of the silicon-carbon composite, about 10 wt% to about 50 wt%, and an amount of the amorphous carbon may be about 50 wt% to about 90 wt%. In some embodiments, if the composite includes silicon, amorphous carbon, and crystalline carbon, based on 100 wt% of the silicon-carbon composite, an amount of the silicon may be about 10 wt% to about 50 wt%, an amount of the crystalline carbon may be about 10 wt% to about 70 wt%, and an amount of the amorphous carbon may be about 20 wt% to about 40 wt%.

The amorphous carbon coating layer may have a thickness of about 5 nm to about 100 nm. The silicon particles (primary particles) may have an average particle diameter D₅₀ of about 10 nm to about 1 µm, or about 10 nm to about 200 nm.

In one or more embodiments, the silicon-carbon composite may be included as a first negative electrode active material and crystalline carbon may be included as a second negative electrode active material. A mixing ratio of the first negative electrode active material and the second negative electrode active material may be a weight ratio of about 1:99 to about 50:50. In some embodiments, the negative electrode active material may include the first negative electrode active material and the second negative electrode active material at a weight ratio of about 5:95 to about 20:80.

In one or more embodiments, the binder may be an aqueous binder.

The aqueous binder may include a styrene-butadiene rubber (SBR), an acrylated styrene-butadiene rubber (ABR), an acrylonitrile-butadiene rubber, an acryl rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenol resin, an epoxy resin, polyvinyl alcohol, a copolymer of (meth)acrylic acid and/or a salt thereof, and/or a (meth)acrylonitrile, or a combination thereof.

In one or more embodiments, the aqueous binder may be a copolymer of (meth)acrylic acid and/or a salt thereof, and (meth)acrylonitrile. The salt may be an ammonium salt and/or an amine salt, and for example, an ammonium salt of (meth)acrylic acid, and/or an amine salt of (meth)acrylic acid. In one or more embodiments, (meth)acrylic acid indicates acrylic acid or methacrylic acid and (meth)acrylonitrile indicates acrylonitrile or methacrylonitrile. If the aqueous binder is a copolymer of (meth)acrylic acid and/or a salt thereof and (meth)acrylonitrile, resistance (e.g., electrical resistance) may be further reduced.

The negative electrode according to one or more embodiments includes the negative electrode active material layer including the negative electrode active material, the cellulose-based compound, and the binder, and a current collector supported thereon.

The negative electrode active material layer may further include a conductive material (e.g., an electrically conductive material). The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may be a carbon-based material such as natural graphite, artificial graphite, carbon black, acetylene black, ketjen black, a carbon fiber, and the like; a metal-based material of a metal powder and/or a metal fiber including copper, nickel, aluminum, silver, and/or the like; a conductive polymer (e.g., an electrically conductive polymer) such as a polyphenylene derivative; or a mixture thereof.

In the negative electrode active material layer, an amount of the negative electrode active material may be about 95 wt% to about 99 wt%, or about 96 wt% to about 98 wt% based on the total 100 wt% of the negative electrode active material layer. An amount of the cellulose-based compound may be about 0.5 wt% to 5 wt%, or about 0.5 wt% to about 3 wt% based on the total 100 wt% of the negative electrode active material layer. An amount of the binder may be about 0.5 wt% to about 5 wt%, or about 0.5 wt% to about 3 wt% based on the total 100 wt% of the negative electrode active material layer.

If the negative electrode active material layer further includes the conductive material, the amount of the negative electrode active material may be about 90 wt% to about 98 wt%, or about 92 wt% to about 98 wt% based on the total 100 wt% of the negative electrode active material layer. An amount of the cellulose-based compound may be about 0.5 wt% to about 3 wt%, or about 0.5 wt% to about 2 wt%, and the amount of the binder may be about 0.5 wt% to about 3 wt%, or about 0.5 wt% to about 2 wt%. An amount of the conductive material may be about 0.5 wt% to about 4 wt% or about 0.5 wt% to about 3 wt%.

The current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

Another embodiment provides a rechargeable lithium battery including the negative electrode, a positive electrode, and an electrolyte.

The positive electrode includes a current collector and a positive electrode active material layer on the current collector.

The positive electrode active material may include lithiated intercalation compounds that reversibly intercalate and deintercalate lithium ions. In some embodiments, one or more composite oxides of a metal selected from cobalt, manganese, nickel, and a combination thereof, and lithium, may be use. For example, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O₂₋ₐT₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li _{(3-f)}Fe₂(PO₄)₃ (0≤f≤2); and LiₐFePO₄ (0.90≤a≤1.8).

In the above chemical formulas, A is selected from Ni, Co, Mn, or a combination thereof; X is selected from Al, Ni, Co, Mn, Cr, Fe, Mg, Sr, V, a rare earth element, or a combination thereof; D' is selected from O, F, S, P, or a combination thereof; E is selected from Co, Mn, or a combination thereof; T is selected from F, S, P, or a combination thereof; G is selected from Al, Cr, Mn, Fe, Mg, La, Ce, Sr, V, or a combination thereof; Q is selected from Ti, Mo, Mn, or a combination thereof; Z is selected from Cr, V, Fe, Sc, Y, or a combination thereof; J is selected from V, Cr, Mn, Co, Ni, Cu, or a combination thereof.

The compounds may have a coating layer on a surface thereof, or may be mixed together with another compound having a coating layer. The coating layer may include at least one coating element compound selected from the group consisting of an oxide of a coating element, a hydroxide of the coating element, an oxyhydroxide of the coating element, an oxycarbonate of the coating element, and a hydroxyl carbonate of the coating element. The compound for the coating layer may be amorphous and/or crystalline. The coating element included in the coating layer may include Mg, Al, Co, K, Na, Ca, Si, Ti, V, Sn, Ge, Ga, B, As, Zr, or a mixture thereof. The coating layer may be provided using a method having no (or substantially no) adverse influence on properties of a positive electrode active material by using these elements in the compound, and for example, the method may include any suitable coating method such as spray coating, dipping, and/or the like, but is not illustrated in more detail because it should be readily recognizable to those of ordinary skill in the art upon reviewing the present disclosure.

In the positive electrode, an amount of the positive electrode active material may be about 90 wt% to about 98 wt% based on the total weight of the positive electrode active material layer.

In some embodiments, the positive electrode active material layer may further include a binder and a conductive material (e.g., an electrically conductive material). The binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but is not limited thereto.

The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may be carbon-based material such as natural graphite, artificial graphite, carbon black, acetylene black, ketjen black, a carbon fiber and the like; a metal-based material of a metal powder and/or a metal fiber including copper, nickel, aluminum, silver, and/or the like; a conductive polymer (e.g., an electrically conductive polymer) such as a polyphenylene derivative; or a mixture thereof.

The current collector may include Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methyl propionate, ethyl propionate, decanolide, mevalonolactone, caprolactone, and/or the like. The ether-based solvent may include dibutyl ether, tetraglyme, diglyme, dithoxyethane, 2-methyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, and/or the like; sulfolanes, and/or the like.

The organic solvent may be used alone or in a mixture. If the organic solvent is used in a mixture, the mixture ratio may be controlled in accordance with a suitable or desirable battery performance, and it may be any suitable one generally used in the related art.

The carbonate-based solvent may include a mixture including a cyclic carbonate and a linear carbonate. The cyclic carbonate and linear carbonate may be mixed together in a volume ratio of about 1:1 to about 1:9, and if the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

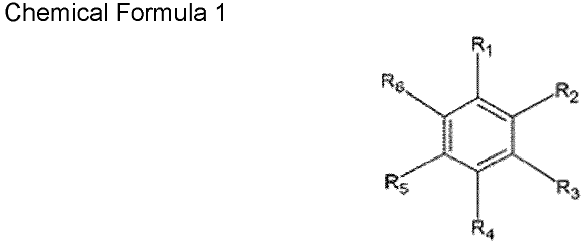

In Chemical Formula 1, R₁ to R₆ are the same or different and are selected from hydrogen, a halogen, a C1 to C10 alkyl group, a haloalkyl group, and a combination thereof.

Examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylethyl carbonate, vinylene carbonate, an ethylene carbonate-based compound represented by Chemical Formula 2 as an additive for improving cycle life.

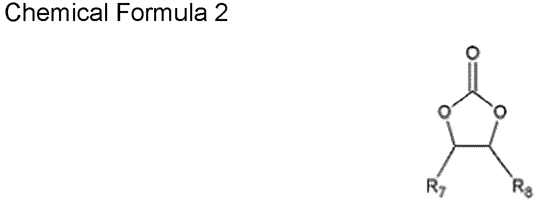

In Chemical Formula 2, R₇ and R₈ are the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like. An amount of the additive for improving the cycle-life characteristics may be used within a suitable or appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salts selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiCLO₄, LiAlO₂, LiAlCl4, LiPO₂F₂, LiN(CₓF₂ₓ₊₁SO₂)(C_{y}F_{2y+1}SO₂), wherein x and y are natural numbers, for example, an integer of about 1 to about 20, lithium difluoro(bisoxolato) phosphate, LiCl, Lil, LiB(C₂O₄)₂ (lithium bis(oxalato) borate: LiBOB) and/or lithium difluoro(oxalate)borate (LiDFOB). A concentration of the lithium salt may be in a range from about 0.1 M to about 2.0 M. If the lithium salt is included at the above concentration range, an electrolyte may have excellent performance and lithium ion mobility due to suitable or optimal electrolyte conductivity and viscosity.

A separator may be between the positive electrode and the negative electrode depending on a type (or kind) of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg (OH)₂, boehmite, or a combination thereof, but is not limited thereto.

The organic material and the inorganic material may be mixed together in one coating layer, or a coating layer including an organic material and a coating layer including an inorganic material may be stacked.

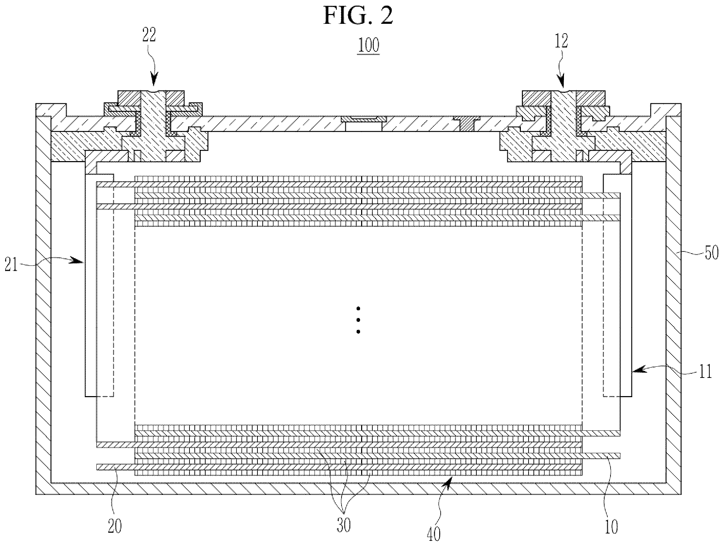

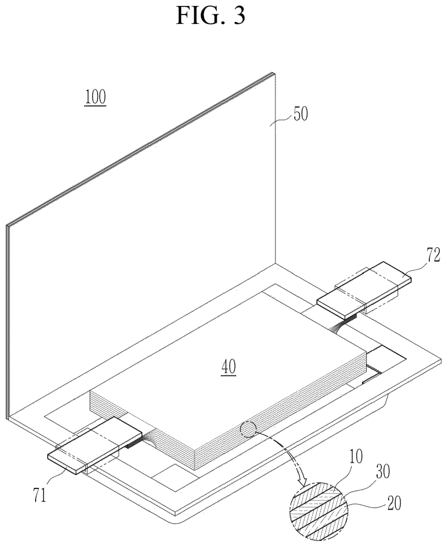

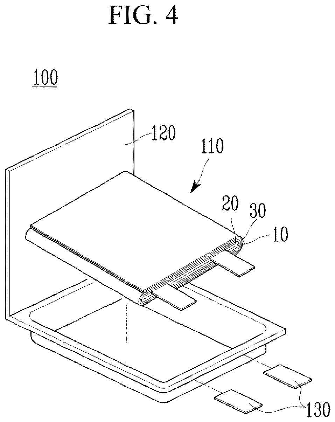

The rechargeable lithium battery may be classified into cylindrical, prismatic, pouch, or coin-type batteries, and/or the like depending on their shape. FIGS. 1 to 4 are schematic views illustrating a rechargeable lithium battery according to one or more embodiments. FIG. 1 shows a cylindrical battery, FIG. 2 is a cross-sectional view showing a prismatic battery, and FIG. 3 and FIG. 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. The rechargeable lithium battery 100 may include an electrode tab 70 (FIG. 4), which may be, for example, a positive electrode tab 71 and a negative electrode tab 72 (FIG. 3) serving as an electrical path for inducing the current formed in the electrode assembly 40 to the outside.

Hereinafter, examples of the present disclosure and comparative examples are described. These examples, however, are not in any sense to be interpreted as limiting the scope of the present disclosure.

### Example 1

97.5 wt% of an artificial graphite negative electrode active material, 1 wt% of carboxymethyl cellulose (purity: 99.93 wt%), and 1.5 wt% of a styrene butadiene rubber were mixed together in a water solvent to prepare a negative electrode active material layer slurry.

The negative electrode active material layer slurry was coated on a Cu foil current collector, dried, and pressurized to prepare a negative electrode active material layer, thereby preparing a negative electrode.

The negative electrode, a lithium metal counter electrode, and an electrolyte were used to fabricate a half-cell. The electrolyte was used by dissolving 1 M LiPF₆ in a mixed solvent of ethylene carbonate and dimethyl carbonate (3:7 volume ratio).

### Example 2

A negative electrode and a half-cell were fabricated by the same procedure as in Example 1, except that carboxymethyl cellulose having a purity of 99.91 wt% was used.

### Example 3

A negative electrode and a half-cell were fabricated by the same procedure as in Example 1, except that carboxymethyl cellulose having a purity of 99.00 wt% was used.

### Comparative Example 1

A negative electrode and a half-cell were fabricated by the same procedure as in Example 1, except that carboxymethyl cellulose having a purity of 98.20 wt% was used.

### Comparative Example 2

A negative electrode and a half-cell were fabricated by the same procedure as in Example 1, except that carboxymethyl cellulose having a purity of 97.60 wt% was used.

### Experimental Example 1 Evaluation of Na amount

The half-cells according to Examples 1 to 3 and Comparative Examples 1 and 2 were subjected to a formation charge and discharge at 0.1 C three times, and then the negative electrode was separated. For the separated negative electrode, a Na amount was measured via an ICP (inductively coupled plasma) analysis. The results are shown in Table 1.

**Table 1**

| | Na amount (ppm) |
|---|---|
| Example 1 | 200 |
| Example 2 | 400 |
| Example 3 | 600 |
| Comparative Example 1 | 100 |
| Comparative Example 2 | 700 |

### Experimental Example 2 Evaluation of DC-IR Direct current internal resistance

The half-cells according to Examples 1 to 3 and Comparative Examples 1 to 2 were charged at a constant current! constant voltage of 1.0 C, 4.45 V, and a 0.05 C cut-off at 25 °C, paused for 10 minutes, discharged at a constant current of 1.0 C and a 3.00 V cut-off, and paused for 10 minutes as a one cycle, and this cycle was repeated 100 cycles. In each cycle, a voltage drop (V) was measured while a current flowed at 1 C for 1 second under a SOC50 (charged to be 50% of charge capacity based on 100% of entire battery charge capacity, which is 50% discharged in a discharge state). The results are shown in Table 2, as a direct current internal resistance (DC-IR).

### Experimental Example 3 Evaluation of low temperature dischargeability

The half-cells according to Examples 1 to 3 and Comparative Examples 1 and 2 were once charged and discharged at 1.0 C under -10 °C. A ratio of discharge capacity relative to charge capacity was calculated. The results are shown in Table 2.

**Table 2**

| | DC-IR (mΩ) | Low temperature dischargeability (%) |
|---|---|---|
| Comparative Example 1 | 36.7 | 63 |
| Example 1 | 34.1 | 80 |
| Example 2 | 34.5 | 77 |
| Example 3 | 35.0 | 71 |
| Comparative Example 2 | 38.5 | 52 |

**As** shown in Table 2, the cells of Examples 1 to 3 in which the Na amount in the negative electrode was 200 ppm to 600 ppm exhibited low electrical resistance and excellent low temperature dischargeability.

Whereas, the cell in which the Na amount in the negative electrode was low (Comparative Example 1) or the cell in which Na amount was high (Comparative Example 2), exhibited increases in resistance and deteriorated low temperature discharge rate. While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the spirit and scope of the appended claims, and equivalents thereof.

## Claims

1. A negative electrode (20) for a rechargeable lithium battery (100), comprising:
a negative electrode active material, a cellulose-based compound, and a binder,
wherein an amount of sodium (Na) in the negative electrode (20) is 200 ppm to 600 ppm.

2. The negative electrode (20) for a rechargeable lithium battery (100) as claimed in claim 1, wherein the amount of Na is 200 ppm to 400 ppm.

3. The negative electrode (20) for a rechargeable lithium battery (100) as claimed in claim 1 or claim 2, wherein the cellulose-based compound comprises carboxymethyl cellulose, hydroxypropylmethyl cellulose, methyl cellulose, an alkali metal salt thereof, or a combination thereof.

4. The negative electrode (20) for a rechargeable lithium battery (100) as claimed in any one of the preceding claims 1 to 3, wherein the cellulose-based compound comprises an alkali metal salt, wherein the alkali metal salt is a Na salt, a K salt, a Li salt, or a combination thereof.

5. The negative electrode (20) for a rechargeable lithium battery (100) as claimed in any one of the preceding claims 1 to 4, wherein the cellulose-based compound comprises a carboxymethyl cellulose lithium salt, or a mixture of a carboxymethyl cellulose lithium salt and a carboxymethyl cellulose sodium salt.

6. The negative electrode (20) for a rechargeable lithium battery (100) as claimed in any one of the preceding claims 1 to 5, wherein the amount of the sodium is a value measured via an inductively Coupled Plasma Mass Spectrometery method.

7. The negative electrode (20) for a rechargeable lithium battery (100) as claimed in any one of the preceding claims 1 to 6, wherein the negative electrode active material comprises a carbon-based negative electrode active material, a silicon-based negative electrode active material, or a combination thereof.

8. The negative electrode (20) for a rechargeable lithium battery (100) as claimed in any one of the preceding claims 1 to 7, wherein the binder is an aqueous binder.

9. The negative electrode (20) for a rechargeable lithium battery (100) as claimed in any one of the preceding claims 1 to 8, wherein the binder is an aqueous binder, and wherein the aqueous binder comprises a styrene-butadiene rubber (SBR), an acrylated styrene-butadiene rubber (ABR), an acrylonitrile-butadiene rubber, an acryl rubber, a butyl rubber, a fluorine rubber, an ethylene oxide-containing polymer, polyvinyl pyrrolidone, polypropylene, polyepichlorohydrin, polyphosphazene, an ethylene propylenediene copolymer, polyvinyl pyridine, chlorosulfonated polyethylene, latex, a polyester resin, an acrylic resin, a phenol resin, an epoxy resin, polyvinyl alcohol, a copolymer of (meth)acrylic acid, a copolymer of (meth)acrylic acid salt, (meth)acrylonitrile, or a combination thereof.

10. The negative electrode (20) for a rechargeable lithium battery (100) as claimed in any one of the preceding claims 1 to 9, wherein the binder is an aqueous binder, and wherein the aqueous binder comprises a copolymer of (meth)acrylic acid, or (meth)acrylic acid salt, and (meth)acrylonitrile copolymerf.

11. The negative electrode (20) for a rechargeable lithium battery (100) as claimed in any one of the preceding claims 1 to 10, wherein the binder is an aqueous binder, and wherein the aqueous binder comprises a (meth)acrylic acid salt, wherein the (meth)acrylic acid salt comprises an ammonium salt, an amine salt, or a combination thereof.

12. The negative electrode (20) for a rechargeable lithium battery (100) as claimed in any one of the preceding claims 1 to 11, wherein the binder is an aqueous binder, and wherein the aqueous binder comprises a (meth)acrylonitrile copolymer, wherein the amount of the (meth)acrylonitrile is 10 wt% to 50 wt% based on 100 wt% of the copolymer.

13. A rechargeable lithium battery (100), comprising:
a negative electrode (20) as claimed in any one of the preceding claims 1 to claim 12;
a positive electrode (10); and
an electrolyte.
